**Europäisches Patentamt**

**European Patent Office**

**Office européen des brevets**

(19)

(11) Veröffentlichungsnummer : **0 477 408 B1**

(12) **EUROPÄISCHE PATENTSCHRIFT**

(45) Veröffentlichungstag der Patentschrift :
**15.02.95 Patentblatt 95/07**

(21) Anmeldenummer : **90118605.6**

(22) Anmeldetag : **27.09.90**

(51) Int. Cl.⁶ : **G05B 19/41,** B23C 3/12,
B23Q 15/00

(54) **Vefahren zum Bearbeiten von Werkstücken mit einer numerisch gesteuerten Maschine.**

(43) Veröffentlichungstag der Anmeldung :
**01.04.92 Patentblatt 92/14**

(45) Bekanntmachung des Hinweises auf die
Patenterteilung :
**15.02.95 Patentblatt 95/07**

(84) Benannte Vertragsstaaten :
**DE FR IT NL SE**

(56) Entgegenhaltungen :
**EP-A- 0 103 351**
**EP-A- 0 282 599**
**DE-A- 3 432 773**

(73) Patentinhaber : **SIEMENS**
**AKTIENGESELLSCHAFT**
**Wittelsbacherplatz 2**
**D-80333 München (DE)**

(72) Erfinder : **Höhn, Georg, Dipl.-Ing.**
**Gosberg 92**
**D-8551 Pinzberg (DE)**

**Beschreibung**

Die Erfindung bezieht sich auf ein Verfahren zum Bearbeiten von Werkstücken mit einer numerisch gesteuerten Maschine, wobei ein Werkzeug auf einer vorgebbaren Werkzeugbahn entlang einer zu bearbeitenden Werkstückkontur geführt wird, und wobei die Werkzeugbahn einen vorgegebenen Abstand zur Werkstückkontur aufweist.

Beim Bearbeiten von Eckpunkten einer Werkstückkontur, beispielsweise durch eine Fräsmaschine, wird ein möglichst optimaler, d.h. kurzer Bahnverlauf angestrebt, wodurch die Mechanik der Fräsmaschine wenig beansprucht und der Eckpunkt trotzdem präzise bearbeitet wird.

Bei einem bekannten Verfahren wird der Eckpunkt einer Werkstückkontur durch ein Fräswerkzeug bearbeitet, dessen Mittelpunkt auf einer vorgegebenen Werkzeugbahn geführt wird. Am Eckpunkt der Werkstückkontur geht die Werkzeugbahn in ein Kreissegment über, dessen Radius dem Fräswerkzeugradius entspricht. Ein Kreissegment erfüllt zwar die Anforderungen an einen optimalen Bahnverlauf, hat jedoch den Nachteil, daß der Fräser am Eckpunkt der Werkstückkontur ständig im Eingriff ist und so infolge des bei numerischen Steuerungen auftretenden Schleppfehlers die Ecke verrundet wird.

Aufgabe der Erfindung ist es, einen optimierten Bahnverlauf bei der Bearbeitung von Eckpunkten durch numerisch gesteuerten Maschinen zu erhalten und gleichzeitig eine hohe Qualität der Eckkontur zu gewährleisten.

Diese Aufgabe wird dadurch gelöst, daß das Werkzeug an Eckpunkten der Werkstückkontur entlang einer gekrümmten Bahn geführt wird, deren Scheitelpunkt gegenüber einer Kreisbahn mit dem vorgegebenen Abstand um den Eckpunkt überhöht ist, wobei der Übergang von der Werkzeugbahn zur gekrümmten Bahn und umgekehrt stetig verläuft.

Vorzugsweise wird dabei als gekrümmte Bahn ein Ellipsensegment verwendet, da dessen Parameter einfach zu bestimmen sind.

Ein Ausführungsbeispiel der Erfindung wird im folgenden anhand einer Zeichnung näher erläutert.

Die FIG zeigt eine dreieckförmige Werkstückkontur WK die von einem Fräswerkzeug F, das schematisch als Kreis angedeutet ist, bearbeitet wird. Der Mittelpunkt des Fräswerkzeugs F wird entlang einer Werkzeugbahn WB geführt, die von der numerischen Steuerung einer nicht dargestellten Werkzeugmaschine generiert wird.

Zur Bearbeitung des Eckpunkts P geht der geradlinige Verlauf der Werkzeugbahn WB am Punkt $X_0$, $Y_0$, der zum Eckpunkt P den kürzesten Abstand R aufweist, in eine ellipsenförmige Bahnkurve E über. Der Scheitelpunkt $P_S$ des Ellipsensegments E ist gegenüber einem Kreis K, dessen Mittelpunkt mit dem Eckpunkt P zusammenfällt, um den Abstand m überhöht.

Der Übergang von der geradlinigen Werkzeugbahn WB auf die ellipsenförmige Werkzeugbahn E am Punkt $X_0$, $Y_0$, sowie der Übergang von der ellipsenförmigen Bahnkurve E auf die geradlinige Werkzeugbahn WB am Punk $X_1$, $Y_1$ erfolgt stetig. Durch die Überhöhung m der elliptischen Bahn E gegenüber dem Kreis K mit dem Fräswerkzeugradius R wird der Eckpunkt E bei der Bearbeitung des Werkstücks vom Fräswerkzeug F freigeschnitten, so daß sich das Fräswerkzeug F während der Bewegungsumkehr nicht im Eingriff mit dem Werkstück befindet.

Zur Bestimmung des Ellipsensegments werden zunächst der Eckpunkt P, der Öffnungswinkel phi und die beiden Richtungsvektoren $e_1$ und $e_2$ bestimmt. Danach werden die Größen D, A und B, sowie der Anfangsparameter $psi_0$ gemäß den unten angegebenen Beziehungen ermittelt. Schließlich berechnet man den Ellipsenmittelpunkt M mit Hilfe des Eckpunkts P, des Richtungsvektors $e_1$ und der Größe D und erhält dann die Ellipsenparametrierung:

$$(X(psi), y(psi)) := M + \cos(psi) \cdot A \cdot e_1 + \\ + \sin(psi) \cdot B \cdot e_2 \quad (1)$$

mit psi größer/gleich $-psi_0$ und kleiner gleich $psi_0$

Bei der Herleitung der Ellipsenparameter wird von der Ellipsengleichung

$$X^2/A^2 + Y^2/B^2 = I, \text{ mit A kleiner/gleich B} \quad (2)$$

ausgegangen. Im Punkt $X_0$, $Y_0$ lautet die zugehörige Tangentengleichung

$$X_0/A^2 \cdot X + Y_0/B^2 \cdot y = I \quad (3)$$

und die Normalengleichung

$$Y_0/B^2 \cdot X + X_0/A^2 \cdot Y = X_0 \cdot Y_0 \cdot (I/B^2 - I/A^2) \quad (4)$$

Ein Kreis, der die Ellipse im Punkt $(X_0, Y_0)$ berührt und dessen Mittelpunkt auf der großen Halbachse liegt, hat als Mittelpunkt den Schnittpunkt der x-Achse mit der Normalengleichung. Es gilt also:

$$P = (D,O) = (X_0 \cdot (I - B^2/A^2), O) \quad (5)$$

d. h., der Mittelpunkt der Ellipse befindet sich im Abstand x = D vom Eckpunkt P mit

$$D = X_0 (I - B^2/A^2) \quad (6)$$

Für den Radius R gilt dann:

$$R^2 = ||(X_0, Y_0) - (D, O)||^2 = \qquad (7)$$
$$= (X_0 - D)^2 + Y_0^2 = (B^2/A^2 . X_0)^2 + Y_0^2 \qquad (8)$$
$$= B^2/A^2 . X_0^2 . (B^2/A^2 - I) + B^2 \qquad (9)$$

Gibt man umgekehrt den Radius R, den Öffnungswinkel $phi_0$ und den Punkt $(X_0, Y_0)$ vor, so erhält man den Zusammenhang

$$X_0 = D + R . \cos(phi_0) = \qquad (10)$$
$$= X_0 - B^2/A^2 . X_0 + R . \cos(phi_0) \qquad (11)$$

also

$$X_0 = q . R . \cos(phi_0) \text{ mit } q = A^2/B^2 \qquad (12)$$
$$Y_0 = \qquad R . \sin(phi_0) \qquad (13)$$

Aus der Ellipsengleichung (I) erhält man durch einsetzen von (12) und (13)

$$A^2/B^4 . R^2 . \cos^2(phi_0) + I/B^2 . R^2 . \sin^2(phi_0) = I \qquad (14)$$

bzw.

$$q^2 . \cos^2(phi_0) + q . \sin^2(phi_0) = A^2/R^2 \qquad (15)$$

Setzt man für die Überstreckung m = k.R, so erhält man

$$k.R = A - D - R = A - X_0 + B^2/A^2 . X_0 - R \qquad (16)$$
$$= A - q . R \cos(phi_0) + R . \cos(phi_0) - R \qquad (17)$$

also

$$A/R = q . \cos(phi_0) + V \qquad (18)$$

mit

$$V = K + I - \cos(phi_0) \qquad (19)$$

Mit Gleichung (18) und Gleichung (15) erhält man dann für q:

$$q = (K + I - \cos(phi_0))^2 / ((k + I - \cos(phi_0))^2 - k^2 - 2k) = \qquad (20)$$
$$= V^2/(V^2 - k^2 - 2k) \qquad (21)$$

Durch einsetzen in Gleichung (18) ergibt sich A zu:

$$A = R \cos(phi_0) . v^2/(v^2 - k^2 - 2k) + R.v \qquad (22)$$

Für D findet man

$$D = R \cos(phi_0) . (k^2 + 2k)/(v^2 - k^2 - 2k) \qquad (23)$$

Aus der Definitionsgleichung $q = A^2/B^2$ kann B bestimmt werden

$$B = R .((\cos(phi_0) . v + v^2 - k^2 - 2k)/(v^2 - k^2 - 2k))^{1/2} \qquad (25)$$

Wählt man als Ellipsenparametierung:

$$(X(psi), Y(psi)) = (A . \cos(psi), B . \sin(psi)) \qquad (26)$$

dann gilt für den Anfangswinkel $psi_0$:

$$(X_0, Y_0) = (A . \cos(psi_0), B . \sin(psi_0)) \qquad (27)$$

oder

$$\cos(psi_0) = X_0/A = R . \cos(phi_0) . q /A \qquad (28)$$
$$= \frac{\cos(phi_0) . (k + I - \cos(phi_0))}{\cos(phi_0).(k + I - \cos(phi_0)) + (k + I - \cos(phi_0))^2 - k^2 - 2k} \qquad (29)$$

Betrachtet man den Wurzelterm für den Wert B (Gl.25), so stellt man fest, daß dieser für beliebiges k bei hinreichend kleinem phi negativ werden kann. Dies entspricht der Tatsache, daß bei fester Überstreckung bzw. Überhöhung m = k . R und hinreichend stumpfem Winkel der Werkstückkontur keine Ellipse gefunden werden kann, die tangential an die Mittelpunktsbahn anschließt. Man muß also den Überhöhungsfaktor k noch abhängig vom Öffnungswinkel $phi_0$ wählen. Eine geeignete Wahl wäre:

$$K(phi_0) = (I - \cos(phi_0))^2 . (k_0 - k_0^2/4 . \cos(phi_0)) \qquad (30)$$

Für den Wurzelterm aus Gl. 25 gilt dann

$$(k + I - \cos(phi_0))^2 - k^2 - 2k = (I - \cos(phi_0))^2 . (I - k_0/4 . \cos(phi_0))^2 \qquad (31)$$

Die gefundenen Beziehungen für A, B, C und $psi_0$ benötigen trotz vielfacher Möglichkeiten zum Optimieren noch große Rechenleistung. Zur Vereinfachung kann jedoch der Wert $k_0$ fest vorgegeben werden. Die Funktionen für A, B, D und $psi_0$ sind dann nur noch von phi abhängig und können in einer Tabelle hinterlegt werden. Eventuelle Ungenauigkeiten infolge von Interpolationsfehlern sind dabei unkritisch, wenn geeignet gerundet wird, da das Werkzeug nicht an der Kontur arbeitet.

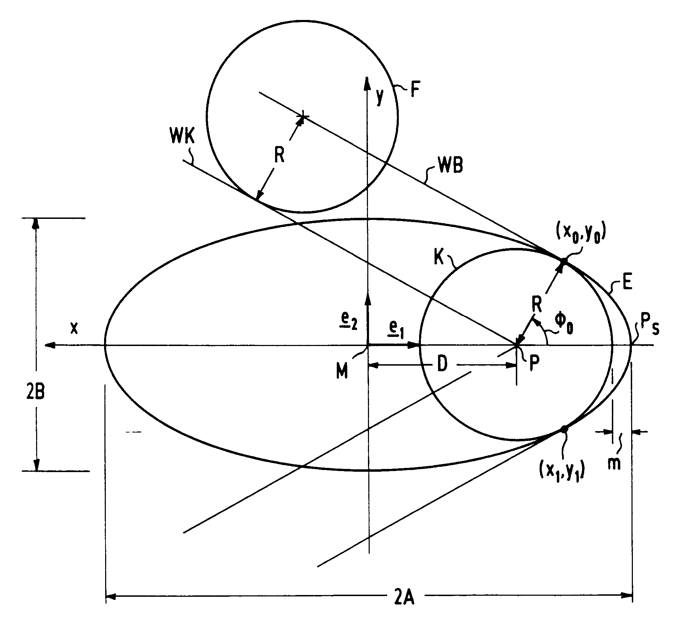

**Patentansprüche**

1.   Verfahren zum Bearbeiten von Werkstücken mit einer numerisch gesteuerten Maschine, wobei ein Werkzeug (F) auf einer vorgebbaren Werkzeugbahn (WB) entlang einer zu bearbeitenden Werkstückkontur (WK) geführt wird, und wobei die Werkzeugbahn einen vorgegebenen Abstand (R) zur Werkzeugkontur aufweist **dadurch gekennzeichnet**, daß das Werkzeug (F) an Eckpunkten (P) der Werkstückkontur (WK) entlang einer gekrümmten Bahn (E) geführt wird, deren Scheitelpunkt (P$_S$) gegenüber einer Kreisbahn (K) mit dem vorgegebenen Abstand (R) um den Eckpunkt (P) überhöht ist, wobei der Übergang von der Werkzeugbahn (WB) zur gekrümmten Bahn (E) und umgekehrt, stetig verläuft.

2. Verfahren nach Anspruch 1, **dadurch gekennzeichnet**, daß die gekrümmte Bahn (E) ein Ellipsensegment (E) ist.

**Claims**

1. Method for machining workpieces with a numerically controlled machine, wherein a tool (F) is guided on a pre-selectable tool path (WB) along a workpiece contour (WK) to be machined, and whereby the tool path is at a pre-selected distance (R) from the tool (sic) contour, characterised in that the tool (F) is guided, at corner points (P) of the workpiece contour (WK), along a curved path (E) whose vertex (P$_S$) is increased around the corner point (P) relative to a circuit (K) with the pre-selected distance (R), wherein the transition from the tool path (WB) to the curved path (E) and vice versa, runs continuously.

2. Method according to claim 1, characterised in that the curved path (E) is an elliptical segment (E).

**Revendications**

1. Procédé d'usinage de pièces avec une machine à commande numérique, un outil (F) étant guidé sur une trajectoire d'outil (WB) qui peut être donnée à l'avance, le long d'un contour (WK) d'une pièce à usiner, la trajectoire de l'outil étant à une distance (R) donnée à l'avance du contour de la pièce, caractérisé en ce que l'outil (F) est guidé aux sommets (P) du contour (WK) d'une pièce le long d'une trajectoire courbe (E), dont le point culminant (P$_S$) est surélevé par rapport à une trajectoire circulaire (K) de la distance (R) donnée à l'avance autour du sommet (P), le passage de la trajectoire d'outil (WB) à la trajectoire courbe (E) et inversement s'effectuant en continu.

2. Procédé selon la revendication 1, caractérisé en ce que la trajectoire courbe (E) est un segment d'ellipse (E).

EP 0 477 408 B1

5